# EUROPÄISCHE PATENTSCHRIFT

(11) **EP 3 545 617 B1**
(45) Veröffentlichungstag und Bekanntmachung des Hinweises auf die Patenterteilung: **15.02.2023**
(21) Anmeldenummer: 17780086.9
(22) Anmeldetag: 04.10.2017
(51) Int. Cl.: H02P 29/024, H02P 27/06, H02P 21/00

(54) **SCHUTZVORRICHTUNG FÜR EIN ELEKTRISCHES ANTRIEBSSYSTEM, ELEKTRISCHES ANTRIEBSSYSTEM UND VERFAHREN ZUM BETRIEB EINES ELEKTRISCHEN ANTRIEBSSYSTEMS**
PROTECTIVE DEVICE FOR AN ELECTRIC DRIVE SYSTEM, ELECTRIC DRIVE SYSTEM, AND METHOD FOR OPERATING AN ELECTRIC DRIVE SYSTEM
DISPOSITIF DE PROTECTION POUR SYSTÈME D'ENTRAÎNEMENT ÉLECTRIQUE, SYSTÈME D'ENTRAÎNEMENT ÉLECTRIQUE ET PROCÉDÉ POUR FAIRE FONCTIONNER UN SYSTÈME D'ENTRAÎNEMENT ÉLECTRIQUE

(30) Priorität: 28.11.2016 DE 102016223539
(43) Veröffentlichungstag der Anmeldung: 02.10.2019
(73) Patentinhaber: Robert Bosch GmbH, 70442 Stuttgart (DE)
(72) Erfinder: RAMESH CHANDRAN, Aravind, 71636 Ludwigsburg (DE); HENNEN, Martin, 70191 Stuttgart (DE)
(86) Internationale Anmeldenummer: PCT/EP2017/075201
(87) Internationale Veröffentlichungsnummer: WO 2018/095632

(56) Entgegenhaltungen:
- WO-A2-2011/085837
- WO-A2-2013/110482
- DE-A1-102010 053 303
- DE-A1-102011 081 173
- DE-U1-202013 004 937

## Beschreibung

Die vorliegende Erfindung betrifft eine Schutzvorrichtung für ein elektrisches Antriebssystem, ein elektrisches Antriebssystem und ein Verfahren zum Betrieb eines elektrischen Antriebssystems.

### Stand der Technik

Elektrische Antriebe von Hybrid- oder Elektrofahrzeugen umfassen eine elektrische Maschine, wie zum Beispiel eine permanenterregte Synchronmaschine oder eine Asynchronmaschine. Die elektrische Maschine eines solchen Antriebssystems kann mittels eines Pulswechselrichters mit einer Wechselspannung versorgt werden. Dabei kann es bei einem Fehlerzustand in dem Antriebssystem notwendig sein, in dem Wechselrichter einen sicheren Zustand einzustellen. Ein solcher sicherer Zustand kann beispielsweise einen aktiven Kurzschluss umfassen, in welchem die einzelnen Phasen der elektrischen Maschine über den Wechselrichter kurzgeschlossen sind. Einen weiteren sicheren Zustand stellt beispielsweise der Freilauf dar. Hierbei sind alle Schaltelemente des Wechselrichters geöffnet. Ein Stromfluss ist dabei nur über die Freilaufdioden möglich, welche parallel zu den Schaltelementen des Wechselrichters vorgesehen sind.

Die Druckschrift DE 10 2010 053 303 A1 offenbart ein Verfahren und eine Vorrichtung zur Steuerung von Elementen eines Wechselrichters einer Elektromaschine, insbesondere in einem Kraftfahrzeug, welche eine sogenannte Rekuperation in einem generatorischen Betriebsmodus der Elektromaschine verbessert. In Abhängigkeit einer Phasenspannung und einer Drehzahl der Elektromaschine und einer Zwischenkreisspannung wird hierzu von dem motorischen Betriebsmodus in den generatorischen Betriebsmodus gewechselt.

Die Druckschrift WO 2013/110482 A2 offenbart eine Überspannungsschutzvorrichtung für einen elektrischen Antrieb, insbesondere einen Antrieb für ein Kraftfahrzeug. Eine Steuereinheit ist ausgebildet, die elektrische Maschine in Abhängigkeit einer Überspannung von einem generatorischen Betrieb in einen motorischen Betrieb zu überführen.

Die Druckschrift DE 10 2011 081 173 A1 offenbart eine Betriebszustandsschaltung für einen Wechselrichter und ein Verfahren zum Einstellen von Betriebszuständen eines Wechselrichters. Insbesondere ist hierbei vorgesehen, in Abhängigkeit von einer ermittelten Drehzahl einer elektrischen Maschine entweder in einen Freilaufzustand oder einen aktiven Kurzschluss zu schalten.

### Offenbarung der Erfindung

Die vorliegende Erfindung offenbart eine Schutzvorrichtung für ein elektrisches Antriebssystem mit den Merkmalen des Patentanspruchs 1, ein elektrisches Antriebssystem mit den Merkmalen des Patentanspruchs 5 und ein Verfahren zum Betrieb eines elektrischen Antriebssystems mit den Merkmalen des Patentanspruchs 8.

### Demgemäß ist vorgesehen:

Eine Schutzvorrichtung für ein elektrisches Antriebssystem. Das elektrische Antriebssystem umfasst einen Stromrichter. Der Stromrichter ist eingangsseitig mit einem Zwischenkreiskondensator verbunden. Weiterhin ist der Stromrichter ausgangsseitig mit einer elektrischen Maschine verbunden. Die Schutzvorrichtung umfasst einen Spannungssensor und eine Steuereinrichtung. Der Spannungssensor ist dazu ausgelegt, eine elektrische Spannung über den Zwischenkreiskondensator zu erfassen. Die Steuereinrichtung ist dazu ausgelegt, abwechselnd ein erstes Ansteuersignal für den Stromrichter basierend auf einem ersten Raumzeigervektor bereitzustellen, und ein zweites Ansteuersignal für den Stromrichter basierend auf einem zweiten Raumzeigervektor bereitzustellen. Das erste und das zweite Ansteuersignal werden abwechselnd bereitgestellt, nachdem durch den Spannungssensor über den Zwischenkreiskondensator eine elektrische Spannung erfasst worden ist, die einen ersten vorbestimmten Schwellwert überschreitet.

### Weiterhin ist vorgesehen:

Ein elektrisches Antriebssystem mit einem Zwischenkreiskondensator, einer elektrischen Maschine, einem Stromrichter und einer erfindungsgemäßen Schutzvorrichtung. Der Stromrichter ist eingangsseitig mit dem Zwischenkreiskondensator elektrisch gekoppelt. Weiterhin ist der Stromrichter ausgangsseitig mit der elektrischen Maschine gekoppelt.

### Ferner ist vorgesehen:

Ein Verfahren zum Betrieb eines elektrischen Antriebssystems. Das elektrische Antriebssystem umfasst einen Stromrichter. Der Stromrichter ist eingangsseitig mit einem Zwischenkreiskondensator verbunden. Weiterhin ist der Stromrichter ausgangsseitig mit einer elektrischen Maschine verbunden. Das Verfahren umfasst einen Schritt zum Erfassen einer elektrischen Spannung über dem Zwischenkreiskondensator. Weiterhin umfasst das Verfahren Schritte zum abwechselnden Ansteuern des Stromrichters basierend auf einem ersten Raumzeigervektor und einem zweiten Raumzeigervektor, nachdem die erfasste elektrische Spannung über dem Zwischenkreiskondensator einen vorbestimmten ersten Schwellwert unterschritten hat.

Die Schritte des Ansteuerns des Stromrichters basierend auf dem ersten Raumzeigervektor und des Ansteuerns des Stromrichters basierend auf dem zweiten Raumzeigervektor können insbesondere solange wiederholt werden, bis eine vorbestimmte Abbruchbedingung erfüllt ist. Beispielsweise kann diese Abbruchbedingung das Unterschreiten eines elektrischen Stroms oder das Unterschreiten einer vorbestimmten elektrischen Spannung in dem elektrischen Antriebssystem umfassen.

### Vorteile der Erfindung

Der vorliegenden Erfindung liegt die Erkenntnis zugrunde, dass beim Übergang in einen sicheren Betriebszustand, wie zum Beispiel in einen aktiven Kurzschluss oder in einen Freilauf, in einem elektrischen Antriebssystem mit einer rotierenden elektrischen Maschine hohe Belastungen auftreten können. So können beispielsweise bei einem Wechsel in den aktiven Kurzschluss hohe elektrische Ströme auftreten, die von der elektrischen Maschine ausgegeben werden. Ferner können beim Einstellen eines Freilaufbetriebs hohe Spannungen auftreten, die über die Freilaufdioden in dem Wechselrichter des Antriebssystems einen Zwischenkreiskondensator aufladen können. Kann diese in den Zwischenkreiskondensator eingespeiste elektrische Energie nicht abgebaut werden, weil beispielsweise eine angeschlossene Batterie von dem Antriebssystem abgetrennt worden ist, so entstehen über dem Zwischenkreiskondensator hohe Spannungen, die zu einer Beschädigung oder gegebenenfalls Zerstörung von Bauelementen in dem elektrischen Antriebssystem führen können.

Der vorliegenden Erfindung liegt daher die Idee zugrunde, dieser Erkenntnis Rechnung zu tragen und einen Schutz für ein elektrisches Antriebssystem bereitzustellen. Hierdurch kann die elektrische Energie in dem Antriebssystem abgebaut werden, ohne dass hierbei hohe elektrische Ströme oder Spannungen auftreten, welche zu einer Beschädigung oder Zerstörung von Bauelementen in dem elektrischen Antriebssystem führen. Hierzu ist es vorgesehen, die elektrische Spannung über dem Zwischenkreiskondensator zu überwachen. Überschreitet die elektrische Spannung über dem Zwischenkreiskondensator einen vorgegebenen Grenzwert, so wird daraufhin in dem elektrischen Antriebssystem solange zwischen einem motorischen und einem generatorischen Betriebszustand hin und her gewechselt, bis die Energie in dem elektrischen Antriebssystem so weit abgebaut ist, dass keine gefährlich hohen Spannungen und/oder Ströme mehr auftreten.

Die Ansteuerung des Stromrichters in dem elektrischen Antriebssystem kann beispielsweise unter Verwendung sogenannter Raumzeigervektoren erfolgen. Mittels vorgegebener Raumzeigervektoren kann hierbei eine sogenannte Raumzeigermodulation (Englisch: space vector modulation, SVM) implementiert werden. Mittels Raumzeigermodulation ist es möglich, eine angeschlossene elektrische Maschine auf Basis einer Pulsbreitenmodulation anzusteuern. Insbesondere kann es sich bei dem Stromrichter des elektrischen Antriebssystems somit um einen Stromrichter handeln, welcher mittels Raumzeigermodulation eine entsprechende Pulsbreitenmodulation zum Bereitstellen der Wechselspannung für die angeschlossene elektrische Maschine ausführt.

Da auch der Abbau der elektrischen Energie in dem elektrischen Antriebssystem basierend auf vorgegebenen Raumzeigervektoren erfolgt, kann eine besonders einfache Ansteuerung bei einer Spannungsüberhöhung am Zwischenkreis realisiert werden. Insbesondere kann durch geeignete Raumzeigervektoren besonders einfach zwischen motorischem Betriebsmodus und generatorischem Betriebsmodus hin und her gewechselt werden. Ein rascher Wechsel zwischen diesen beiden Betriebsmodi kann dabei aufgrund den Verlusten in den Bauteilen des Antriebssystems einen zuverlässigen Abbau der Energie ermöglichen, ohne dass hierbei hohe Spannungen und/oder Ströme auftreten, die zu einer Beschädigung von Bauteilen führen könnten.

Der jeweilige Wechsel zwischen motorischem Betriebsmodus und generatorischem Betriebsmodus in dem Antriebssystem zum Abbau der elektrischen Energie erfolgt dabei auf Grundlage der elektrischen Spannung über dem Zwischenkreiskondensator. Durch die Überwachung der Zwischenkreisspannung kann eine Überhöhung der Zwischenkreisspannung auf ein gefährliches Niveau zuverlässig verhindert werden. Darüber hinaus bietet die Überwachung der Zwischenkreisspannung eine sehr einfache und effiziente Ausgangsbasis für die erfindungsgemäße Ansteuerung.

Die Überwachung der Zwischenkreisspannung sowie die Vorgabe der erforderlichen Raumzeigervektoren können insbesondere auch außerhalb der konventionellen Regelung des Stromrichters erfolgen. Auf diese Weise kann die Ansteuerung zum Schutz des elektrischen Antriebssystems unabhängig von der Regelung des Stromrichters erfolgen. Hierdurch ist der Schutz des elektrischen Antriebssystems selbst dann gewährleistet, wenn die Regelung des Stromrichters einen Fehler aufweist.

Alternativ kann die Vorgabe zur Ansteuerung des Stromrichters basierend auf den vorgegebenen Raumzeigervektoren auch innerhalb der Regelung des Stromrichters implementiert werden. Dies ermöglicht einen besonders kompakten und preisgünstigen Aufbau zum Schutz des elektrischen Antriebssystems.

Gemäß einer Ausführungsform ist die Steuereinrichtung der Schutzvorrichtung dazu ausgelegt, das erste Steuersignal für eine vorbestimmte erste Zeitdauer bereitzustellen und das zweite Steuersignal für eine vorbestimmte zweite Zeitdauer bereitzustellen. Die erste und die zweite vorgegebene Zeitdauer können beispielsweise als feste Werte oder als ein Verhältnis zwischen der ersten und der zweiten Zeitdauer spezifiziert werden. Auf diese Weise kann sehr einfach ein Wechsel zwischen einem motorischen und einem generatorischen Betriebsmodus erreicht werden.

Gemäß einer Ausführungsform ist die Steuereinrichtung dazu ausgelegt, das erste Steuersignal bereitzustellen, nachdem die elektrische Spannung über dem Zwischenkreiskondensator den erste vorbestimmten Schwellwert überschreitet, und das zweite Steuersignal bereitzustellen, nachdem die elektrische Spannung über dem Zwischenkreiskondensator einen zweiten vorbestimmten Schwellwert unterschreitet. Hierdurch kann jeder Wechsel zwischen motorischem und generatorischen Betriebsmodus jeweils zu einem geeigneten Zeitpunkt erfolgen.

Gemäß einer Ausführungsform ist die Steuereinrichtung der Schutzvorrichtung für das elektrische Antriebssystem dazu ausgelegt, den vorbestimmten ersten Schwellwert und/oder den vorbestimmten zweiten Schwellwert anzupassen. Insbesondere können der erste und/oder der zweite Schwellwert angepasst werden, nachdem durch den Spannungssensor erstmals detektiert worden ist, dass die elektrische Spannung über dem Zwischenkreiskondensator einen ersten initialen vorbestimmten Schwellwert überschritten hat. Auf diese Weise können insbesondere nach dem erstmaligen Überschreiten des ersten vorbestimmten Schwellwerts und dem daraufhin initiierten Energieabbau im weiteren Verlauf der erste vorbestimmte Schwellwert und der zweite vorbestimmte Schwellwert abgesenkt werden. Insbesondere können der erste und/oder der zweite vorbestimmte Schwellwert solange abgesenkt werden, bis ein vorgegebenes Abbruchkriterium erreicht worden. Ein solches Abbruchkriterium kann beispielsweise ein Unterschreiten einer elektrischen Spannung und/oder ein Unterschreiten eines elektrischen Stroms innerhalb des elektrischen Antriebssystems umfassen. Auf diese Weise kann durch den Wechsel zwischen generatorischem Betrieb und motorischem Betrieb an dem elektrischen Antriebssystem die Spannung über den Zwischenkreiskondensator nach und nach abgesenkt werden, bis ein vorgegebenes Abbruchkriterium erreicht worden ist.

Gemäß einer Ausführungsform ist die Steuereinrichtung dazu ausgelegt, den ersten Raumzeigervektor und/oder den zweiten Raumzeigervektor aus einer Menge vorbestimmter Raumzeigervektoren auszuwählen. Die Vorgabe der Raumzeigervektoren ermöglicht eine besonders einfache und zuverlässige Auswahl der Raumzeigervektoren unabhängig von der Drehfrequenz der elektrischen Maschine. Insbesondere können der erste Raumzeigervektor und/oder der zweite Raumzeigervektor basierend auf einer vorgegebenen Tabelle oder einer vorgegebenen logischen Verknüpfung bestimmt werden. Die Raumzeigervektoren können hierbei insbesondere basierend auf den aktuellen Stromvektoren in dem elektrischen Antriebssystem, das heißt der Stromvektoren in den Phasen zwischen Stromrichter und elektrischer Maschine ermittelt werden.

Gemäß einer Ausführungsform ist die Steuereinrichtung dazu ausgelegt, in dem Stromrichter einen sicheren Betriebsmodus einzustellen, nachdem eine vorgegebene Abbruchbedingung in dem elektrischen Antriebssystem detektiert worden ist. Ein sicherer Betriebsmodus kann beispielsweise einen Freilaufbetrieb oder einen aktiven Kurzschluss umfassen. Die Abbruchbedingung kann beispielsweise das Unterschreiten eines elektrischen Stroms in den Phasen zwischen Stromrichter und elektrischer Maschine umfassen. Insbesondere kann das Abbruchkriterium das Unterschreiten der Summe der Beträge aller Phasenströme umfassen. Weiterhin kann das Abbruchkriterium beispielsweise das Unterschreiten einer elektrischen Spannung, insbesondere einer elektrischen Spannung über dem Zwischenkreiskondensator umfassen.

Gemäß einer Ausführungsform des elektrischen Antriebssystems umfasst das Antriebssystem einen Trennschalter. Der Trennschalter ist ausgangsseitig mit dem Zwischenkreiskondensator gekoppelt. Weiterhin ist der Trennschalter eingangsseitig mit einer elektrischen Energiequelle, beispielsweise einer Batterie, verbindbar. Ein solcher Trennschalter kann folglich eine elektrische Verbindung zwischen der Energiequelle und dem Zwischenkreiskondensator unterbrechen. Nach einer solchen Unterbrechung ist es nicht weiter möglich, elektrische Energie, die in einem Generatorbetrieb von der elektrischen Maschine in den Zwischenkreiskondensator eingespeist wird, weiter in Richtung der Energiequelle, beispielsweise der Batterie, abzuführen. In diesem Fall kann die Steuereinrichtung dazu ausgelegt sein, das erste Ansteuersignal und das zweite Ansteuersignal für den Stromrichter dann bereitzustellen, falls eine elektrische Verbindung zwischen dem Zwischenkreiskondensator und einer angeschlossenen Energiequelle unterbrochen ist. Diese Unterbrechung kann beispielsweise basierend auf einem Schaltzustand des Trennschalters detektiert werden.

Gemäß einer Ausführungsform des elektrischen Antriebssystems umfasst die elektrische Maschine eine Drehfeldmaschine. Beispielsweise kann die elektrische Maschine eine Asynchronmaschine umfassen. Alternativ kann die elektrische Maschine des elektrischen Antriebssystems auch eine Synchronmaschine, insbesondere eine permanenterregte Synchronmaschine, umfassen.

Gemäß einer Ausführungsform des Verfahrens zum Betrieb eines elektrischen Antriebssystems umfasst das Verfahren einen Schritt zum Anpassen des ersten vorbestimmten Schwellwerts und/oder gegebenenfalls des zweiten vorbestimmten Schwellwerts. Insbesondere kann das Anpassen des ersten vorbestimmten Schwellwerts und/oder des zweiten vorbestimmten Schwellwerts während des Ansteuerns des Stromrichters basierend auf dem ersten Raumzeigervektor und/oder dem zweiten Raumzeigervektor erfolgen.

Gemäß einer Ausführungsform umfasst das Verfahren einen Schritt zum Bestimmen mindestens eines ersten Raumzeigervektors. Der so bestimmte erste Raumzeigervektor ist dabei dazu ausgelegt, die elektrische Maschine in einem motorischen Betrieb anzusteuern. Beispielsweise kann als erster Raumzeigervektor ein Raumzeigervektor bestimmt werden, der möglichst zu dem aktuellen Stromvektor entgegengesetzt ist.

Gemäß einer Ausführungsform umfasst das Verfahren einen Schritt zum Bestimmen mindestens eines zweiten Raumzeigervektors. Der zweite Raumzeigervektor ist hierbei dazu ausgelegt, die elektrische Maschine in einem Generatorbetrieb anzusteuern. In diesem Generatorbetrieb erfolgt somit ein Aufladen des Zwischenkreiskondensators in dem elektrischen Antriebssystem. Insbesondere kann als zweiter Raumzeigervektor ein Raumzeigervektor ausgewählt werden, der dem aktuellen Stromvektor vorauseilt.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der vorliegenden Erfindung hinzufügen.

### Kurze Beschreibung der Zeichnungen

Die vorliegende Erfindung wird nachfolgend anhand des in den schematischen Figuren der Zeichnungen angegebenen Ausführungsbeispiels näher erläutert. Dabei zeigen:
- Figur 1:: eine schematische Darstellung eines elektrischen Antriebssystems mit einer Schutzvorrichtung gemäß einer Ausführungsform;
- Figur 2:: eine schematische Darstellung eines Spannungs-Zeit-Diagramms für einen Verlauf der Zwischenkreisspannung gemäß einer Ausführungsform;
- Figur 3:: eine schematische Darstellung eines Spannungs-Zeit-Diagramms für einen Verlauf der Zwischenkreisspannung gemäß einer weiteren Ausführungsform;
- Figur 4:: eine schematische Darstellung zur Erläuterung der Auswahl der Raumzeigervektoren gemäß einer Ausführungsform; und
- Figur 5:: eine schematische Darstellung eines Ablaufdiagramms, wie es einem Verfahren gemäß einer Ausführungsform zugrunde liegt.

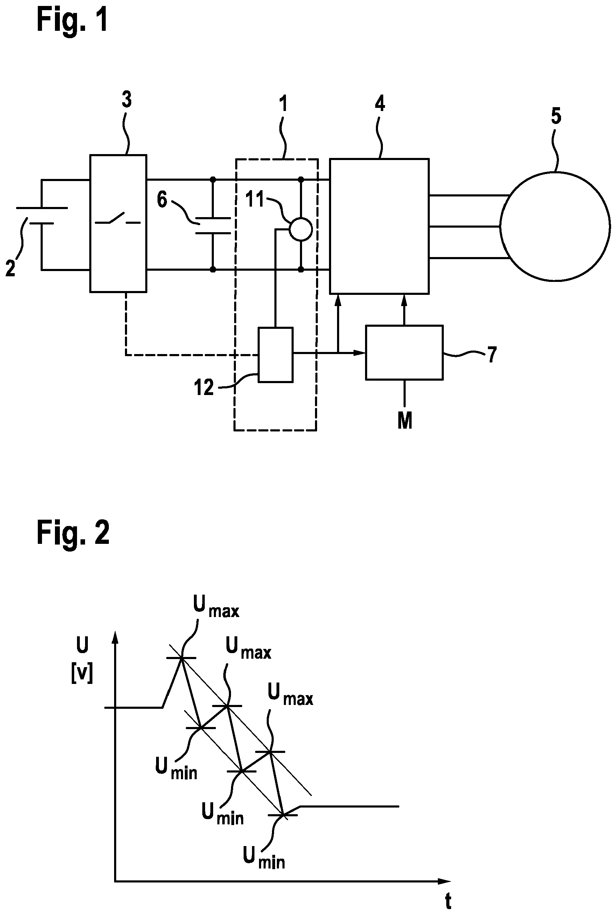

Figur 1 zeigt eine schematische Darstellung eines elektrischen Antriebssystems gemäß einer Ausführungsform. Das elektrische Antriebssystem umfasst eine elektrische Maschine 5, die mit einem Stromrichter 4 elektrisch gekoppelt ist. Bei der elektrischen Maschine 5 kann es sich beispielsweise um eine Drehfeldmaschine handeln. Insbesondere kann es sich bei der elektrischen Maschine 5 um eine Synchronmaschine, wie zum Beispiel eine permanenterregte Synchronmaschine, handeln. Alternativ ist als elektrische Maschine 5 auch beispielsweise eine Asynchronmaschine möglich. Die hier dargestellte Anzahl von drei Phasen der elektrischen Maschine 5 dient dabei lediglich dem besseren Verständnis. Darüber hinaus kann die elektrische Maschine 5 auch eine beliebige andere Anzahl von Phasen, beispielsweise sechs Phasen aufweisen.

Der Stromrichter 4 kann eingangsseitig von einer elektrischen Energiequelle 2, beispielsweise einer Gleichspannungsquelle, wie zum Beispiel einer Traktionsbatterie eines Elektro- oder Hybridfahrzeugs, gespeist werden. Hierbei kann zwischen der elektrischen Energiequelle 2 und dem Stromrichter 4 beispielsweise ein Trennschalter 3 vorgesehen sein. Mittels des Trennschalters 3 kann die elektrische Verbindung zwischen der elektrischen Energiequelle 2 und dem Stromrichter 4 geschlossen oder unterbrochen werden. Insbesondere bei einem Fehlerfall kann beispielsweise mittels des Trennschalters 3 die elektrische Verbindung zwischen der elektrischen Energiequelle 2 und dem Stromrichter 4 unterbrochen werden, so dass im Fehlerfall keine weitere elektrische Energie von der elektrischen Energiequelle 2 in den Stromrichter 4 eingespeist werden kann. Der Trennschalter 3 kann insbesondere auch beispielsweise eine Überstromschutzvorrichtung oder ähnliches umfassen.

Zur Stabilisierung der eingangsseitig am Stromrichter 4 bereitgestellten Gleichspannung kann am Eingang des Stromrichters 4 ein Zwischenkreiskondensator 6 vorgesehen sein. Der Zwischenkreiskondensator 6 befindet sich beispielsweise zwischen dem Trennschalter 3 und dem Eingang des Stromrichters 4.

In einem motorischen Betriebsmodus wird in dem elektrischen Antriebssystem von der elektrischen Energiequelle 2 am Eingang des Stromrichters 4 eine Gleichspannung bereitgestellt. Der Stromrichter 4 konvertiert diese Gleichspannung in eine geeignete weitere Spannung und stellt diese konvertierte Spannung an der elektrischen Maschine 5 bereit. Beispielsweise kann der Stromrichter 4 die Gleichspannung in eine ein- oder mehrphasige Wechselspannung konvertieren, um hierdurch an der elektrischen Maschine 5 ein vorgegebenes Drehmoment M oder eine andere Sollwertvorgabe einzustellen. Hierzu kann beispielsweise das einzustellende Drehmoment M oder eine weitere Sollwertvorgabe an einer Regeleinrichtung 7 bereitgestellt werden. Die Regeleinrichtung 7 bestimmt daraufhin basierend auf dem Drehmoment M oder der Sollwertvorgabe und gegebenenfalls weiteren Parametern des elektrischen Antriebssystems die erforderlichen Ansteuersignale zum Ansteuern des Stromrichters 4.

Bei dem Stromrichter 4 kann es sich beispielsweise um einen Wechselrichter mit einer sogenannten B6-Brücke handeln. Der Wechselrichter 4 kann beispielsweise für jede Phase der elektrischen Maschine 5 einen oberen Halbleiterschalter und einen unteren Halbleiterschalter aufweisen. Hierbei ist jeweils ein oberer Halbleiterschalter zwischen dem Anschluss der positiven Eingangsspannung und einem Phasenanschluss der elektrischen Maschine 5 vorgesehen. Weiterhin ist jeweils ein unterer Halbleiterschalter zwischen dem Anschluss der negativen Eingangsspannung und einem Phasenanschluss der elektrischen Maschine 5 vorgesehen. Parallel zu jedem Halbleiterschalter kann weiterhin eine sogenannte Freilaufdiode vorgesehen sein. Die Regeleinrichtung 7 ermittelt für den Betrieb der elektrischen Maschine 5 daraufhin basierend auf dem Drehmoment M oder der Sollwertvorgabe die geeigneten Ansteuersignale für die jeweiligen Halbleiterschalter in dem Stromrichter 4.

Die Ansteuersignale für die Halbleiterschalter in dem Stromrichter 4 können dabei beispielsweise mittels einer sogenannten Raumzeigermodulation ermittelt werden. Insbesondere können hierbei konventionelle und bekannte Verfahren eingesetzt werden, welche eine Pulsbreitenmodulation basierend auf vorgegebenen Raumzeigern ausführen.

Weiterhin kann das elektrische Antriebssystem auch in einem Generatorbetrieb betrieben werden. Hierbei kann die Rotationsenergie der elektrischen Maschine 5 in elektrische Energie umgewandelt werden. Die elektrische Energie von der elektrischen Maschine 5 wird daraufhin in den Stromrichter 4 eingespeist, der die Wechselspannung von der elektrischen Maschine 5 in eine Gleichspannung umwandelt und die gleichgerichtete Spannung an der elektrischen Energiequelle 2 bereitstellt.

Wird während des Betriebs des elektrischen Antriebssystems die elektrische Verbindung zwischen der elektrischen Energiequelle 2 und dem Stromrichter 4 unterbrochen, so wird daraufhin die elektrische Maschine 5 als Generator an den Phasenanschlüssen eine elektrische Spannung ausgeben. Werden daraufhin die oberen oder unteren Schaltelemente in dem Stromrichter 4 geschlossen (beispielsweise um einen aktiven Kurzschluss einzustellen), so fließen über die Schaltelemente des Stromrichters 4 in den Phasenanschlüssen hohe transiente und stationäre elektrische Ströme. Dies kann gegebenenfalls zu einer Beschädigung oder Zerstörung von Bauelementen in dem Stromrichter 4 führen. Sind die Schaltelemente des Stromrichters 4 dagegen geöffnet (beispielsweise um einen Freilaufmodus einzustellen), so kann die elektrische Energie von der elektrischen Maschine 5 über die Freilaufdioden parallel zu den Schaltelementen in dem Stromrichter 4 in den Zwischenkreiskondensator 6 am Eingang des Stromrichters 4 fließen und daraufhin den Zwischenkreiskondensator 6 aufladen. Da die elektrische Verbindung zwischen der elektrischen Energiequelle 2 und dem Eingang des Stromrichters 4 mit dem Zwischenkreiskondensator 6 jedoch unterbrochen ist, kann keine elektrische Energie aus dem Zwischenkreiskondensator 6 abgeführt werden. Daher wird die elektrische Spannung über den Zwischenkreiskondensator 6 sehr rasch ansteigen. Dieser rasche Spannungsanstieg kann gegebenenfalls zu einer Beschädigung oder Zerstörung von Bauelementen in dem elektrischen Antriebssystem, insbesondere dem Stromrichter 4 führen.

Zur Vermeidung von hohen Spannungsspitzen an dem Zwischenkreiskondensator 6 wird die elektrische Spannung über dem Zwischenkreiskondensator 6 durch einen Spannungssensor 11 der Schutzvorrichtung 1 überwacht. Wird durch den Spannungssensor 11 eine elektrische Spannung detektiert, die einen vorgegebenen initialen oberen Grenzwert überschreitet, so wird durch die Steuereinrichtung 12 der Schutzvorrichtung 1 in dem Stromrichter 4 ein motorischer Betriebsmodus eingestellt. Unter einem motorischen Betriebsmodus ist hierbei ein Betriebsmodus zu verstehen, in welchem der Stromrichter 4 elektrische Energie in die elektrische Maschine 5 einspeist. Diese elektrische Energie, die in die elektrische Maschine 5 eingespeist wird, wird dabei dem Zwischenkreiskondensator 6 entnommen. In der Folge sinkt daraufhin die elektrische Spannung über dem Zwischenkreiskondensator 6.

Wird im weiteren Verlauf durch den Spannungssensor 11 der Schutzvorrichtung 1 detektiert, dass die elektrische Spannung über den Zwischenkreiskondensator 6 einen initialen unteren Grenzwert unterschreitet, so wird dieser motorische Betriebsmodus beendet und in dem Stromrichter 4 ein generatorischer Betriebsmodus eingestellt. Als generatorischer Betriebsmodus ist hierbei ein Betriebsmodus zu verstehen, in dem die elektrische Maschine 5 als Generator arbeitet und dabei Energie aus der Rotation der elektrischen Maschine 5 in elektrische Energie umgewandelt wird. Die elektrische Energie wird dabei durch den Stromrichter 4 in eine Gleichspannung konvertiert und wiederum in den Zwischenkreiskondensator 6 eingespeist. In der Folge wird daraufhin die elektrische Spannung über dem Zwischenkreiskondensator 6 wieder ansteigen.

Alternativ ist es auch möglich, für den motorischen Betriebsmodus und den generatorischen Betriebsmodus jeweils vorgegebene Zeitspannen vorzusehen. Beispielsweise kann zunächst für eine erste vorgegebene Zeitspanne ein motorischer Betriebsmodus eingestellt werden. Nach Ablauf der ersten Zeitspanne kann daraufhin für eine vorgegebene zweite Zeitspanne ein generatorischer Betriebsmodus eingestellt werden. Hierzu können beispielsweise die erste Zeitspanne und die zweite Zeitspanne als feste Zeitspannen vorgegeben werden. Alternativ ist es auch möglich, ein (relatives) Verhältnis zwischen der ersten Zeitspanne und der zweite Zeitspanne vorzugeben. Wird hierbei, beispielsweise basierend auf weiteren Systemparametern, entweder die erste Zeitspanne oder die zweite Zeitspanne variiert, so wird daraufhin auch die jeweils andere Zeitspanne basierend auf dem vorgegebenen Verhältnis angepasst. Dabei ist es auch möglich die Vorgabe für das Verhältnis zwischen den beiden Zeitspannen oder die konkret vorgegebene erste und zweite Zeitspanne zu variieren. Beispielsweise können die erste und die zweite Zeitspanne oder das Verhältnis der beiden Zeitspannen unter Berücksichtigung des Spanungsverlaufs über dem Zwischenkreiskondensator 6 oder weiteren Systemparametern angepasst werden.

Der Wechsel zwischen dem motorischen Betriebsmodus und dem generatorischen Betriebsmodus kann dabei beliebig oft wiederholt werden. Aufgrund der elektrischen Verluste in den Bauelementen, insbesondere in dem Stromrichter 4, wird dabei elektrische Energie in Wärme umgewandelt. Somit kann nach und nach die Rotationsenergie der elektrischen Maschine 5 in Wärmeenergie umgewandelt werden. Durch den kontrollierten Wechsel zwischen generatorischem Betriebsmodus und motorischem Betriebsmodus kann dabei sichergestellt werden, dass die elektrischen Spannungen und Ströme in dem elektrischen Antriebssystem stets unterhalb den vorgegebenen Grenzwerten liegen und somit keine Beschädigung der Bauelemente in dem elektrischen Antriebssystem verursacht wird.

Figur 2 zeigt eine schematische Darstellung eines Spannungs-Zeit-Diagramms für den Spannungsverlauf über dem Zwischenkreiskondensator 6 gemäß einer Ausführungsform.

Der obere Grenzwert Umax für die durch den Spannungssensor 11 über dem Zwischenkreiskondensator 6 detektierte Spannung, bei dessen Überschreiten durch die Steuereinrichtung 12 der Schutzvorrichtung 1 ein motorischer Betriebsmodus eingestellt wird, kann dabei während des Betriebs, insbesondere nach einem erstmaligen Überschreiten des initialen oberen Grenzwerts modifiziert werden. Beispielsweise kann der obere Grenzwert Umax für die elektrische Spannung über dem Zwischenkreiskondensator 6 nach dem erstmaligen Ansprechen nach und nach abgesenkt werden. Analog kann auch der untere Grenzwert Umin, bei dessen Unterschreiten von dem motorischen Betriebsmodus in den generatorischen Betriebsmodus gewechselt wird, ebenfalls modifiziert, insbesondere abgesenkt werden. Hierzu sind beliebige Verfahren zum Anpassen, insbesondere zum Absenken des oberen Grenzwerts Umax und des unteren Grenzwerts Umin möglich. Beispielsweise kann die Anpassung als eine Funktion über die Zeit, eine Funktion über die Phasenströme in den Phasen zwischen dem Stromrichter 4 und der elektrischen Maschine 5 oder als Funktion eines beliebigen weiteren Parameters definiert werden. Ferner ist es auch möglich, bei jedem Überschreiten bzw. Unterschreiten des oberen Grenzwerts Umax bzw. des unteren Grenzwerts Umin die jeweiligen Grenzwerte um einen vorgegebenen Wert abzusenken. Darüber hinaus sind auch beliebige weitere Verfahren zum Anpassen des oberen und unteren Grenzwerts Umax und Umin möglich.

Der Wechsel zwischen dem generatorischen Betriebsmodus und dem motorischen Betriebsmodus kann dabei bis zum Erreichen eines vorgegebenen Abbruchkriteriums durchgeführt werden. Als Abbruchkriterium kann beispielsweise das Erreichen einer vorgegebenen minimalen Spannung über dem Zwischenkreiskondensator 6 sein. Beispielsweise kann der Wechsel zwischen dem generatorischen Betriebsmodus und dem motorischen Betriebsmodus solange durchgeführt werden, bis eine vorgegebene Spannung von beispielsweise 60 Volt, 45 Volt, 30 Volt oder einem beliebigen anderen Wert erreicht ist. Ferner ist es auch möglich, als Abbruchkriterium eine weitere elektrische Größe, beispielsweise die elektrischen Phasenströme in den Phasen zwischen dem Stromrichter 4 und der elektrischen Maschine 5 auszuwerten. So kann beispielsweise der Wechsel zwischen dem generatorischen Betriebsmodus und dem motorischen Betriebsmodus solange durchgeführt werden, bis die Summe der Phasenströme einen vorgegebenen minimalen Stromgrenzwert unterschritten hat.

Das Einstellen des generatorischen Betriebsmodus bzw. des motorischen Betriebsmodus in dem Stromrichter 4 kann dabei analog zu der konventionellen Ansteuerung des elektrischen Antriebssystems ebenfalls basierend auf vorgegebenen Raumzeigern erfolgen. So kann beispielsweise jeweils für die Ansteuerung ein Raumzeiger für den generatorischen Betriebsmodus und ein Raumzeiger für den motorischen Betriebsmodus ermittelt werden. Die Bestimmung der hierfür geeigneten Raumzeiger ist dabei mittels beliebiger geeigneter Verfahren möglich. Insbesondere können die Raumzeiger beispielsweise aus den elektrischen Strömen (Phasenströme) zwischen dem Stromrichter 4 und den Phasenanschlüssen der angeschlossenen elektrischen Maschine 5 ermittelt werden. Hierzu können die Vorzeichen der einzelnen Phasenströme ausgewertet werden und/oder die Höhe der einzelnen Phasenströme miteinander verglichen werden.

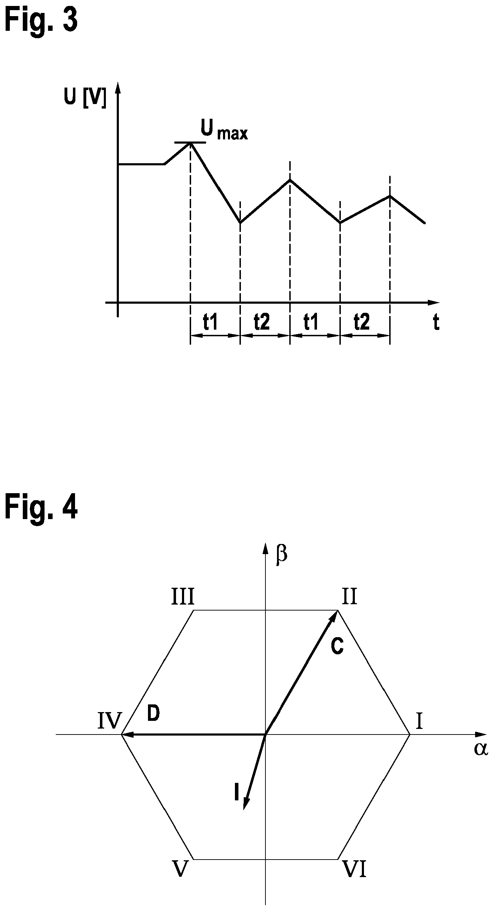

Figur 3 zeigt eine schematische Darstellung für eine alternative Ansteuerung des Stromrichters 4 gemäß einem Ausführungsbeispiel. Hierbei wird der Stromrichter 4 basierend auf einem ersten Raumzeigervektor zunächst für eine erste vorbestimmte Zeitspanne t1 angesteuert und anschließend basierend auf einem zweiten Raumzeigervektor für eine zweite vorbestimmte Zeitspanne t2 angesteuert. Die erste Zeitspanne t1 und die zweite Zeitspanne t2 können hierbei fest vorgegeben werden. Alternativ können die erste und die zweite Zeitspanne auch basierend auf dem Spannungsverlauf an dem Zwischenkreiskondensator 6 oder anderen Systemparametern angepasst werden. Insbesondere ist es auch möglich, ein Verhältnis zwischen der ersten Zeitspanne t1 und der zweiten Zeitspanne t2 vorzugeben oder einzustellen.

Figur 4 zeigt eine schematische Darstellung zur Bestimmung der Raumzeiger gemäß einer Ausführungsform. Die Raumzeiger können beispielsweise in einem statorfesten α-β-Koordinatensystem ermittelt werden. Die möglichen Raumzeiger sind mit I bis VI gekennzeichnet. Der aktuelle Stromvektor ist durch das Bezugszeichen I dargestellt. Als Raumzeigervektor zum Entladen des Zwischenkreiskondensators 6 im motorischen Betriebsmodus kann hierbei ein als "Entladevektor" bezeichneter Vektor D ausgewählt werden, der dem aktuellen Stromvektor möglichst genau 180° gegenüberliegt. Zum Aufladen des Zwischenkreiskondensators 6 in einem generatorischen Betriebsmodus kann beispielsweise ein Raumzeigervektor C gewählt werden, der als sogenannter "Ladevektor" bezeichnet werden kann und dem aktuellen Stromvektor um einen Vektor vorauseilt. Für die Wahl eines geeigneten Raumzeigers kann es hierzu beispielsweise ausreichend sein, jeweils den Sektor zu betrachten, in welchen sich der aktuelle Stromvektor befindet.

Die Schutzvorrichtung 1 des elektrischen Antriebssystems kann hierbei beispielsweise in der Regeleinrichtung 7 für die Erzeugung der Ansteuersignale der Schaltelemente in dem Stromrichter 4 integriert sein.

In einer alternativen Ausführungsform kann die Schutzvorrichtung 1 für das elektrische Antriebssystem auch separat von der Regeleinrichtung 7 ausgeführt werden. Dabei erfolgt die Erfassung der elektrischen Spannung über dem Zwischenkreiskondensator 6 mittels des Spannungssensors 11 sowie die Erzeugung der Ansteuersignale in der Steuereinrichtung 12 unabhängig von der Regeleinrichtung 7. Auf diese Weise kann einerseits sichergestellt werden, dass der Schutz des elektrischen Antriebssystems auch dann gewährleistet wird, wenn ein Fehler in der Regeleinrichtung 7 auftritt. Darüber hinaus ermöglicht eine separate Schutzvorrichtung 1 ein besonders schnelles Ansprechen, so dass bei einer Überhöhung der elektrischen Spannung über den Zwischenkreiskondensator 6 die Schutzvorrichtung 1 besonders rasch ansprechen kann. Hierzu kann die Schutzvorrichtung 1 und insbesondere die Steuereinrichtung 12 beispielsweise mittels einer relativ einfachen Schaltung realisiert werden. Beispielsweise kann die Schutzvorrichtung 1 und insbesondere die Steuereinrichtung 12 mittels programmierbaren logischen Schaltkreisen (PLC) realisiert werden. Hierbei können insbesondere die auszuwählenden Raumzeigervektoren für den generatorischen Betriebsmodus und den motorischen Betriebsmodus in geeigneter Weise als Rechenvorschrift oder in Form einer Tabelle abgelegt werden. Auf diese Weise kann ein sehr rasches Ansprechen der Schutzvorrichtung 1 erreicht werden.

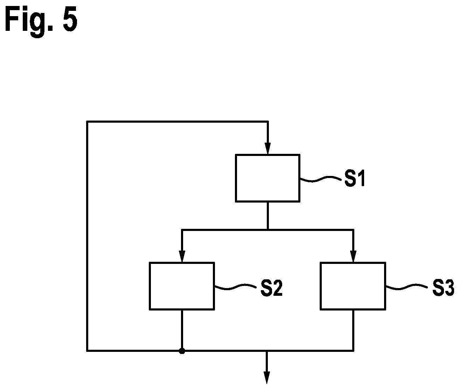

Figur 5 zeigt eine schematische Darstellung eines Ablaufdiagramms, wie es einem Verfahren zum Betrieb eines elektrischen Antriebssystems gemäß einer Ausführungsform zugrundeliegt. Bei dem elektrischen Antriebssystem für dieses Verfahren kann es sich insbesondere um das zuvor beschriebene elektrische Antriebssystem aus elektrischer Maschine 5, Stromrichter 4, Zwischenkreiskondensator 6 und elektrischem Energiespeicher 2 handeln. In Schritt S1 wird eine elektrische Spannung über dem Zwischenkreiskondensator 6 erfasst. In Schritt S2 wird der Stromrichter 4 basierend auf einem ersten Raumzeiger angesteuert, nachdem die erfasste elektrische Spannung über dem Zwischenkreiskondensator 6 einen vorbestimmten ersten Schwellwert Umax überschritten hat. Diese Ansteuerung erfolgt solange, bis die erfasste elektrische Spannung über dem Zwischenkreiskondensator 6 einen vorbestimmten zweiten Schwellwert Umin unterschritten hat. Anschließend kann in Schritt S3 der Stromrichter 4 basierend auf einem zweiten Raumzeigervektor angesteuert werden. Bei dem ersten Raumzeigervektor kann es sich hierbei, wie bereits zuvor beschrieben, um einen Raumzeigervektor handeln, der in dem elektrischen Antriebssystem einen motorischen Betriebsmodus einstellt. Analog kann es sich bei dem zweiten Raumzeigervektor um einen Raumzeigervektor handeln, der in dem elektrischen Antriebssystem einen generatorischen Betriebsmodus einstellt.

Alternativ ist es auch möglich, den Stromrichter 4 jeweils für vorbestimmte Zeitspannen abwechselnd in Schritt S2 basierend auf einem ersten Raumzeigervektor anzusteuern und in Schritt S3 basierend auf einem zweiten Raumzeigervektor anzusteuern.

Die Schritte S2 und S3 zum Ansteuern des Stromrichters basierend auf dem ersten Raumzeigervektor bzw. dem zweiten Raumzeigervektor können dabei solange abwechselnd wiederholt werden, bis ein vorgegebenes Abbruchkriterium erreicht wird.

Wie zuvor bereits beschrieben, können der erste Schwellwert für das Einstellen des motorischen Betriebsmodus basierend auf dem ersten Raumzeigervektor und/oder der zweite Schwellwert für das Einstellen des generatorischen Betriebsmodus basierend auf dem zweiten Raumzeigervektor während des Ansteuern des Stromrichters in den Schritten S2 und S3 angepasst und insbesondere abgesenkt werden.

Durch die zuvor beschriebene abwechselnde Ansteuerung in dem motorischen Betriebsmodus bzw. dem generatorischen Betriebsmodus kann die in dem elektrischen Antriebssystem gespeicherte Energie nach und nach in Wärmeenergie umgewandelt werden. Auf diese Weise kann einerseits die Rotationsenergie der elektrischen Maschine 5 abgebaut werden. Ferner ist es auf diese Weise auch möglich, einen gegebenenfalls aufgeladenen Zwischenkreiskondensator 6 so weit zu entladen, bis die Spannung über dem Zwischenkreiskondensator 6 eine ungefährliche Spannungshöhe erreicht hat.

Nachdem die elektrische Energie in dem elektrischen Antriebssystem durch den zuvor beschriebenen Wechsel zwischen generatorischem Betriebsmodus und motorischem Betriebsmodus so weit abgebaut worden ist, dass ein vorgegebenes Abbruchkriterium erreicht worden ist, kann daraufhin in dem elektrischen Antriebssystem ein sogenannter sicherer Betriebsmodus eingestellt werden. Bei diesem sicheren Betriebsmodus kann es sich beispielsweise um einen sogenannten Freilauf handeln. In diesem Freilauf sind alle Schaltelemente in dem Stromrichter 4 geöffnet. Alternativ ist als sicherer Betriebsmodus auch ein sogenannter aktiver Kurzschluss möglich, bei dem entweder die oberen Schaltelemente oder die unteren Schaltelemente des Stromrichters 4 geschlossen sind, so dass die Phasenanschlüsse der elektrischen Maschine 5 kurzgeschlossen sind.

Zusammenfassend betrifft die vorliegende Erfindung einen Schutz eines elektrischen Antriebssystems. Tritt am Eingang eines Stromrichters des elektrischen Antriebssystems über dem Zwischenkreis eine Spannungsüberhöhung auf, so wird zum Abbau dieser Spannungsüberhöhung in dem elektrischen Antriebssystem zwischen einem motorischen Betriebsmodus und einem generatorischen Betriebsmodus hin und her gewechselt, um die elektrische Energie des Zwischenkreiskondensators abzubauen. Für den motorischen Betriebsmodus und den generatorischen Betriebsmodus können jeweils geeignete Raumzeigervektoren vorgegeben werden. Dies ermöglicht eine besonders einfache und schnelle Ansteuerung zum Abbau der elektrischen Energie in dem elektrischen Antriebssystem.

## Patentansprüche

1. Schutzvorrichtung (1) für ein elektrisches Antriebssystem, das einen Stromrichter (4) umfasst, der eingangsseitig mit einem Zwischenkreiskondensator (6) verbunden ist und der ausgangsseitig mit einer elektrischen Maschine (5) verbunden ist, wobei die Schutzvorrichtung (1) folgendes umfasst:
einen Spannungssensor (11), der dazu ausgelegt ist eine elektrische Spannung über dem Zwischenkreiskondensator (6) zu erfassen; und
eine Steuereinrichtung (12), die dazu ausgelegt ist, abwechselnd ein erstes Ansteuersignal für den Stromrichter (4) basierend auf einem ersten Raumzeigervektor bereitzustellen, und ein zweites Ansteuersignal für den Stromrichter (4) basierend auf einem zweiten Raumzeigervektor bereitzustellen, nachdem durch den Spannungssensor (11) über dem Zwischenkreiskondensator (6) eine elektrische Spannung erfasst worden ist, die einen ersten vorbestimmten Schwellwert (Umax) überschreitet,
wobei
der erste Raumzeigervektor in dem elektrischen Antriebssystem einen motorischen Betriebsmodus einstellt und der zweite Raumzeigervektor in dem elektrischen Antriebssystem einen generatorischen Betriebsmodus einstellt,
wobei zum Abbau der elektrischen Energie in dem elektrischen Antriebssystem zwischen motorischem Betriebsmodus und
generatorischem Betriebsmodus wiederholt hin und her gewechselt wird
**dadurch gekennzeichnet, dass**
die Steuereinrichtung (12) dazu ausgelegt ist, das erste Steuersignal bereitzustellen, nachdem die elektrische Spannung über dem Zwischenkreiskondensator (6) den erste vorbestimmten Schwellwert überschreitet, und das zweite Steuersignal bereitzustellen, nachdem die elektrische Spannung über dem Zwischenkreiskondensator (6) einen zweiten vorbestimmten Schwellwert (Umin) unterschreitet,
und den ersten vorbestimmten Schwellwert (Umax) und den zweiten vorbestimmten Schwellwert (Umin) anzupassen,
wobei nach dem erstmaligen Überschreiten des ersten vorbestimmten Schwellwerts und dem daraufhin initiierten Energieabbau im weiteren Verlauf der erste vorbestimmte Schwellwert und der zweite vorbestimmte Schwellwert abgesenkt werden.

2. Schutzvorrichtung (1) nach Anspruch 1, wobei die Steuereinrichtung (12) dazu ausgelegt ist, das erste Steuersignal für eine vorbestimmte erste Zeitdauer bereitzustellen und das zweite Steuersignal für eine vorbestimmte zweite Zeitdauer bereitzustellen.

3. Schutzvorrichtung (1) nach einem der Ansprüche 1 bis 2, wobei die Steuereinrichtung (12) dazu ausgelegt ist, den ersten Raumzeigervektor und/oder den zweiten Raumzeigervektor aus einer Menge vorbestimmter Raumzeigervektoren auszuwählen.

4. Schutzvorrichtung (11) nach einem der Ansprüche 1 bis 3, wobei die Steuereinrichtung (12) dazu ausgelegt ist, in dem Stromrichter einen Freilaufbetrieb oder einen aktiven Kurzschluss einzustellen, falls ein elektrischer Strom zwischen dem Stromrichter und der elektrischen Maschine einen vorgegebenen Grenzwert unterschreitet.

5. Elektrisches Antriebssystem, mit:
einem Zwischenkreiskondensator (6);
einer elektrischen Maschine (5);
einem Stromrichter (4), der eingangsseitig mit dem Zwischenkreiskondensator (6) elektrischen gekoppelt ist, und der ausgangsseitig mit der elektrischen Maschine (5) elektrisch gekoppelt ist; und
einer Schutzvorrichtung (1) gemäß einem der Ansprüche 1 bis 4.

6. Elektrisches Antriebssystem nach Anspruch 5, mit einem Trennschalter (3), der ausgangsseitig mit dem Zwischenkreiskondensator (6) elektrisch gekoppelt ist und der eingangsseitig mit einer elektrischen Energiequelle (2) verbindbar ist.

7. Verfahren zum Betrieb eines elektrischen Antriebssystems, das einen Stromrichter (4) umfasst, der eingangsseitig mit einem Zwischenkreiskondensator (6) verbunden ist und ausgangsseitig mit einer elektrischen Maschine (5) verbunden ist, mit den Schritten:
Erfassen (S1) einer elektrischen Spannung über dem Zwischenkreiskondensator (6);Ansteuern (S2,S3) des Stromrichters (4) abwechselnd basierend auf einem ersten Raumzeigervektor und basierend auf einem zweiten Raumzeigervektor, nachdem die erfasste elektrische Spannung über dem Zwischenkreiskondensator (6) den vorbestimmten ersten Schwellwert (Umax) überschritten hat,
wobei
mittels dem ersten Raumzeigervektor in dem elektrischen Antriebssystem ein motorischer Betriebsmodus einstellt wird und mittels dem zweiten Raumzeigervektor in dem elektrischen Antriebssystem ein generatorischer Betriebsmodus einstellt wird,
wobei zum Abbau der elektrischen Energie in dem elektrischen Antriebssystem zwischen motorischem Betriebsmodus und
generatorischem Betriebsmodus wiederholt hin und her gewechselt wird,
**gekennzeichnet durch** die Schritte:
Bereitstellen des ersten Steuersignals, nachdem die elektrische Spannung über dem Zwischenkreiskondensator (6) den erste vorbestimmten Schwellwert überschreitet,
Bereitstellen des zweiten Steuersignals, nachdem die elektrische Spannung über dem Zwischenkreiskondensator (6) einen zweiten vorbestimmten Schwellwert (Umin) unterschreitet,
Anpassen des ersten vorbestimmten Schwellwertes (Umax) und des zweiten vorbestimmten Schwellwertes (Umin),
wobei nach dem erstmaligen Überschreiten des ersten vorbestimmten Schwellwerts und dem daraufhin initiierten Energieabbau im weiteren Verlauf der erste vorbestimmte Schwellwert und der zweite vorbestimmte Schwellwert abgesenkt werden.

8. Verfahren nach Anspruch 7, mit einem Schritt zum Bestimmen eines ersten Raumzeigervektors, wobei der erste Raumzeigervektor dazu ausgelegt ist, die elektrische Maschine (5) in einem motorischen Betrieb anzusteuern.

9. Verfahren nach Anspruch 7 oder 8, mit einem Schritt zum Bestimmen eines zweiten Raumzeigervektors, wobei der zweite Raumzeigervektor dazu ausgelegt ist, die elektrische Maschine (5) in einem Generatorbetrieb anzusteuern.

## Claims

1. Protective device (1) for an electric drive system which comprises a power converter (4) which is connected on the input side to an intermediate circuit capacitor (6), and which is connected on the output side to an electric machine (5), wherein the protective device (1) comprises the following:
a voltage sensor (11) which is configured to sense an electrical voltage across the intermediate circuit capacitor (6); and
a control apparatus (12) which is configured to make available alternately a first actuation signal for the power converter (4) on the basis of a first space vector and a second actuation signal for the power converter (4) on the basis of a second space vector, after an electrical voltage which exceeds a first predetermined threshold value (Umax) has been sensed across the intermediate circuit capacitor (6) by the voltage sensor (11),
wherein
the first space vector sets a motor operating mode in the electric drive system and the second space vector sets a generator operating mode in the electric drive system,
wherein, in order to reduce the electrical energy in the electric drive system, switching to and fro between the motor operating mode and the generator operating mode is performed repeatedly,
**characterized in that**
the control apparatus (12) is configured to make available the first control signal after the electrical voltage across the intermediate circuit capacitor (6) exceeds the first predetermined threshold value, and to make available the second control signal after the electrical voltage across the intermediate circuit capacitor (6) undershoots a second predetermined threshold value (Umin), and to adapt the first predetermined threshold value (Umax) and the second predetermined threshold value (Umin),
wherein, after the first predetermined threshold value has been exceeded for the first time and the energy reduction initiated in response thereto, the first predetermined threshold value and the second predetermined threshold value are subsequently lowered.

2. Protective device (1) according to Claim 1, wherein the control apparatus (12) is configured to make available the first control signal for a predetermined first time period and the second control signal for a predetermined second time period.

3. Protective device (1) according to one of Claims 1 to 2, wherein the control apparatus (12) is configured to select the first space vector and/or the second space vector from a set of predetermined space vectors.

4. Protective device (11) according to one of Claims 1 to 3, wherein the control apparatus (12) is configured to set a free-wheeling operating mode or an active short circuit in the power converter if an electrical current between the power converter and the electric machine undershoots a predetermined limiting value.

5. Electric drive system having:
an intermediate circuit capacitor (6);
an electric machine (5);
a power converter (4) which is electrically coupled on the input side to the intermediate circuit capacitor (6), and which is electrically coupled on the output side to the electric machine (5); and
a protective device (1) according to one of Claims 1 to 4.

6. Electric drive system according to Claim 5, having an isolating switch (3) which is electrically coupled on the output side to the intermediate circuit capacitor (6), and which can be connected on the input side to an electrical energy source (2).

7. Method for operating an electric drive system which comprises a power converter (4) which is connected on the input side to an intermediate circuit capacitor (6), and is connected on the output side to an electric machine (5), having the steps:
sensing (S1) an electrical voltage across the intermediate circuit capacitor (6); actuating (S2, S3) the power converter (4) alternately on the basis of a first space vector and on the basis of a second space vector after the sensed electrical voltage across the intermediate circuit capacitor (6) has exceeded the predetermined first threshold value (Umax),
wherein
the first space vector is used to set a motor operating mode in the electric drive system and the second space vector is used to set a generator operating mode in the electric drive system, wherein, in order to reduce the electrical energy in the electric drive system, switching to and fro between the motor operating mode and the generator operating mode is performed repeatedly,
**characterized by** the steps:
making available the first control signal after the electrical voltage across the intermediate circuit capacitor (6) exceeds the first predetermined threshold value,
making available the second control signal after the electrical voltage across the intermediate circuit capacitor (6) undershoots a second predetermined threshold value (Umin),
adapting the first predetermined threshold value (Umax) and the second predetermined threshold value (Umin),
wherein, after the first predetermined threshold value has been exceeded for the first time and the energy reduction initiated in response thereto, the first predetermined threshold value and the second predetermined threshold value are subsequently lowered.

8. Method according to Claim 7, having a step for determining a first space vector, wherein the first space vector is configured to actuate the electric machine (5) in a motor operating mode.

9. Method according to Claim 7 or 8, having a step for determining a second space vector, wherein the second space vector is configured to actuate the electric machine (5) in a generator operating mode.

## Revendications

1. Arrangement de protection (1) pour un système d'entraînement électrique, lequel comporte un convertisseur de courant (4) dont l'entrée est reliée à un condensateur de circuit intermédiaire (6) et dont la sortie est reliée à une machine électrique (5), l'arrangement de protection (1) comprenant les éléments suivants :
un capteur de tension (11), qui est conçu pour acquérir une tension électrique aux bornes du condensateur de circuit intermédiaire (6) ; et
un dispositif de commande (12), qui est conçu pour, en alternance, fournir un premier signal de commande pour le convertisseur de courant (4) en se basant sur un premier vecteur pointeur spatial, et fournir un deuxième signal de commande pour le convertisseur de courant (4) en se basant sur un deuxième vecteur pointeur spatial, après qu'ait été acquise, par le capteur de tension (11) aux bornes du condensateur de circuit intermédiaire (6), une tension électrique qui dépasse une première valeur de seuil (Umax) prédéterminée,
le premier vecteur pointeur spatial réglant, dans le système d'entraînement électrique, un mode de fonctionnement en moteur et le deuxième vecteur pointeur spatial réglant, dans le système d'entraînement électrique, un mode de fonctionnement en générateur,
un changement répété entre le mode de fonctionnement en moteur et le mode de fonctionnement en générateur ayant lieu en vue de diminuer l'énergie électrique dans le système d'entraînement électrique
**caractérisé en ce que**
le dispositif de commande (12) est conçu pour fournir le premier signal de commande après que la tension électrique aux bornes du condensateur de circuit intermédiaire (6) ait dépassé la première valeur de seuil prédéterminée, et fournir le deuxième signal de commande après que la tension électrique aux bornes du condensateur de circuit intermédiaire (6) est devenue inférieure à une deuxième valeur de seuil (Umin) prédéterminée,
et adapter la première valeur de seuil (Umax) prédéterminée et la deuxième valeur de seuil (Umin) prédéterminée,
après le premier dépassement de la première valeur de seuil prédéterminée et la diminution d'énergie initiée de ce fait, la première valeur de seuil prédéterminée et la deuxième valeur de seuil prédéterminée étant abaissées dans la suite du déroulement.

2. Arrangement de protection (1) selon la revendication 1, le dispositif de commande (12) étant conçu pour fournir le premier signal de commande pendant une première durée prédéterminée et le deuxième signal de commande pendant une deuxième durée prédéterminée.

3. Arrangement de protection (1) selon l'une des revendications 1 à 2, le dispositif de commande (12) étant conçu pour sélectionner le premier vecteur pointeur spatial et/ou le deuxième vecteur pointeur spatial à partir d'un ensemble de vecteurs pointeurs spatiaux prédéterminés.

4. Arrangement de protection (1) selon l'une des revendications 1 à 3, le dispositif de commande (12) étant conçu pour régler dans le convertisseur de courant un mode de roue libre ou un court-circuit actif dans le cas où un courant électrique entre le convertisseur de courant et la machine électrique devient inférieur à une valeur de seuil prédéfinie.

5. Système d'entraînement électrique, comprenant :
un condensateur de circuit intermédiaire (6) ;
une machine électrique (5) ;
un convertisseur de courant (4) dont l'entrée est connectée électriquement au condensateur de circuit intermédiaire (6) et dont la sortie est connectée électriquement à la machine électrique (5) ; et
un arrangement de protection (1) selon l'une des revendications 1 à 4.

6. Système d'entraînement électrique selon la revendication 5, comprenant un sectionneur (3) dont la sortie est connectée électriquement au condensateur de circuit intermédiaire (6) et dont l'entrée peut être reliée à une source d'énergie électrique (2).

7. Procédé pour faire fonctionner un système d'entraînement électrique, lequel comporte un convertisseur de courant (4) dont l'entrée est reliée à un condensateur de circuit intermédiaire (6) et dont la sortie est reliée à une machine électrique (5), comprenant les étapes suivantes :
acquisition (S1) d'une tension électrique aux bornes du condensateur de circuit intermédiaire (6) ; commande (S2, S3) du convertisseur de courant (4) en alternance en se basant sur un premier vecteur pointeur spatial et en se basant sur un deuxième vecteur pointeur spatial, après que la tension électrique acquise aux bornes du condensateur de circuit intermédiaire (6) a dépassé la première valeur de seuil (Umax) prédéterminée,
un mode de fonctionnement en moteur étant réglé dans le système d'entraînement électrique au moyen du premier vecteur pointeur spatial et un mode de fonctionnement en générateur étant réglé dans le système d'entraînement électrique au moyen du deuxième vecteur pointeur spatial, un changement répété entre le mode de fonctionnement en moteur et le mode de fonctionnement en générateur ayant lieu en vue de diminuer l'énergie électrique dans le système d'entraînement électrique
**caractérisé par** les étapes suivantes :
fourniture du premier signal de commande après que la tension électrique aux bornes du condensateur de circuit intermédiaire (6) a dépassé la première valeur de seuil prédéterminée,
fourniture du deuxième signal de commande après que la tension électrique aux bornes du condensateur de circuit intermédiaire (6) est devenue inférieure à une deuxième valeur de seuil (Umin) prédéterminée,
adaptation de la première valeur de seuil (Umax) prédéterminée et de la deuxième valeur de seuil (Umin) prédéterminée,
après le premier dépassement de la première valeur de seuil prédéterminée et la diminution d'énergie initiée de ce fait, la première valeur de seuil prédéterminée et la deuxième valeur de seuil prédéterminée étant abaissées dans la suite du déroulement.

8. Procédé selon la revendication 7, comprenant une étape de détermination d'un premier vecteur pointeur spatial, le premier vecteur pointeur spatial étant conçu pour commander la machine électrique (5) dans un mode de fonctionnement en moteur.

9. Procédé selon la revendication 7 ou 8, comprenant une étape de détermination d'un deuxième vecteur pointeur spatial, le deuxième vecteur pointeur spatial étant conçu pour commander la machine électrique (5) dans un mode de fonctionnement en générateur.
